# EUROPEAN PATENT SPECIFICATION

(11) **EP 3 325 543 B1**
(45) Date of publication and mention of the grant of the patent: **08.04.2020**
(21) Application number: 16739575.5
(22) Date of filing: 30.06.2016
(51) Int. Cl.: C08J 9/00, C08L 71/12, C08J 9/14, C08L 77/00, C08L 67/00, C08L 23/00

(54) **FOAMED MATERIAL AND ASSOCIATED ARTICLE AND METHOD**
GESCHÄUMTES MATERIAL SOWIE ZUGEHÖRIGE ARTIKEL UND VERFAHREN
MATÉRIAU MOUSSÉ ET OBJET ET PROCÉDÉ ASSOCIÉS

(30) Priority: 22.07.2015 US 201562195344 P
(43) Date of publication of application: 30.05.2018
(73) Proprietor: SABIC Global Technologies B.V., 4612 PX Bergen op Zoom (NL)
(72) Inventor: LANDA, Adrie, 4612 PX Bergen op Zoom (NL); HAGENAARS, Arno C., 4612 PX Bergen op Zoom (NL); BERIX, Mark, 4612 PX Bergen op Zoom (NL)
(74) Representative: Lang, Johannes
(86) International application number: PCT/IB2016/053951
(87) International publication number: WO 2017/013510

(56) References cited:
- EP-A1- 0 540 271
- EP-A1- 0 601 783
- DATABASE WPI Week 199441 Thomson Scientific, London, GB; AN 1994-330202 XP002760685, -& JP 3 349749 B2 (ASAHI KASEI KOGYO KK) 25 November 2002 (2002-11-25)
- DATABASE WPI Week 201509 Thomson Scientific, London, GB; AN 2015-03449H XP002760686, -& KR 101 476 912 B1 (LOTTE CHEM CORP) 29 December 2014 (2014-12-29)

## Description

### BACKGROUND OF THE INVENTION

Foamed materials made from polystyrene alone as well as polystyrene/poly(phenylene ether) blends exhibit desirable properties including light weight and excellent thermal insulation. Increasing the poly(phenylene ether) content of the foams increases their heat resistance, but the poly(phenylene ether) content is limited by processing considerations.

Both polystyrene and polystyrene/poly(phenylene ether) foams have poor resistance to organic solvents, in particular organic fuels such as gasoline and diesel. The poor chemical resistance of these foams limits their use in automotive underhood applications and in other market segments that require good chemical resistance.

There is a need for foam materials that exhibit improved solvent resistance relative to polystyrene and polystyrene/poly(phenylene ether) foams.

### BRIEF SUMMARY OF EMBODIMENTS OF THE INVENTION

One embodiment is a foamed material, comprising, based on the total weight of the foamed material: 50 to 90 weight percent of a semicrystalline resin selected from the group consisting of polyamides, polyesters, and combinations thereof; and 10 to 50 weight percent of a poly(phenylene ether); wherein the foamed material has a density of 40 to 700 kilograms/meter³ at 23 °C.

Another embodiment is an article comprising the foamed material.

Another embodiment is a method of forming a foamed material, the method comprising: adding a blowing agent to a molten thermoplastic material to form a pre-foamed molten thermoplastic material; wherein the molten thermoplastic material comprises the product of melt blending (a) 50 to 90 weight percent of a semicrystalline resin selected from the group consisting of polyamides, polyesters, and combinations thereof, and (b) 10 to 50 weight percent of a poly(phenylene ether); wherein weight percent are based on the total weight of the foamed material; and extruding the pre-foamed molten thermoplastic material from an extruder to form the foamed material; wherein the foamed material has a density of 40 to 700 kilograms/meter³ measured at 23 °C.

These and other embodiments are described in detail below.

### DETAILED DESCRIPTION OF THE INVENTION

The present inventors have determined that relative to foamed materials prepared from polystyrene/poly(phenylene ether) blends, a foamed material prepared from a blend of a semicrystalline resin and a poly(phenylene ether) exhibits improved solvent resistance. This property allows the foam to be used to make articles, such as automotive underhood components, that must withstand exposure to hydrocarbon fluids.

One embodiment is a foamed material, comprising, based on the total weight of the foamed material: 50 to 90 weight percent of a semicrystalline resin selected from the group consisting of polyamides, polyesters, and combinations thereof; and 10 to 50 weight percent of a poly(phenylene ether); wherein the foamed material has a density of 40 to 700 kilograms/meter³ at 23 °C.

Japanese Patent No. 3349749 to Nanba et al., Korean Patent No. 10-1476912 to Jeong et al., and European Patent Application Publication No. 0 540 271 A1 of Martynowicz disclose similar foams employing a blend of a semicrystalline polyolefin and a poly(phenylene ether). European Patent Application Publication No. 0 601 783 A1 of Burnell discloses a similar foam employing an unspecified blend of a polyamide and a poly(phenylene ether).

According to the present invention, the semicrystalline resin can be a polyamide, a polyester, or a combination thereof.

Polyamides, also known as nylons, are characterized by the presence of a plurality of amide (-C(O)NH-) groups. In some embodiments, the polyamide is selected from the group consisting of polyamide-6, polyamide-6,6, polyamide-4,6, polyamide-11, polyamide-12, polyamide-6,10, polyamide-6,12, polyamide-6/6,6, polyamide-6/6,12, polyamide-MXD,6, polyamide-6,T, polyamide-6,1, polyamide-6/6,T, polyamide-6/6,I, polyamide-6,6/6,T, polyamide-6,6/6,1, polyamide-6/6,T/6,I, polyamide-6,6/6,T/6,I, polyamide-6/12/6,T, polyamide-6,6/12/6,T, polyamide-6/12/6,I, polyamide-6,6/12/6,I, polyamide-9,T, and combinations thereof. In some embodiments, the polyamide comprises a polyamide-6,6. In some embodiments, the polyamide or combination of polyamides has a melting point (Tₘ) greater than or equal to 171°C.

Polyamides can be obtained by a number of well-known processes. Polyamides are also commercially available from a variety of sources.

Polyamides having a viscosity number of up to 400 milliliters per gram (mL/g) can be used, or, more specifically, having a viscosity number of 90 to 350 mL/g, or, even more specifically, having a viscosity number of 110 to 250 mL/g, as measured in a 0.5 weight percent solution in 96 weight percent sulfuric acid in accordance with ISO 307.

In some embodiments, the polyamide has an amine end group concentration greater than or equal to 30 microequivalents amine end group per gram of polyamide (µeq/g) as determined by titration with hydrochloric acid. The amine end group concentration can be 30 to 100 µeq/g, specifically 30 to 80 µeq/g. Amine end group content can be determined by dissolving the polyamide in a suitable solvent, optionally with heat. The polyamide solution is titrated with 0.01 Normal hydrochloric acid (HCl) solution using a suitable indication method. The amount of amine end groups is calculated based the volume of HCl solution added to the sample, the volume of HCl used for the blank, the molarity of the HCl solution, and the weight of the polyamide sample.

When the semicrystalline resin comprises a polyamide, a compatibilizing agent can, optionally, be used to facilitate formation of a compatibilized blend of the polyamide and the poly(phenylene ether). As used herein, the term "compatibilizing agent" refers to a polyfunctional compound that interacts with the poly(phenylene ether), the polyamide, or both. This interaction can be chemical (for example, grafting) and/or physical (for example, affecting the surface characteristics of the dispersed phases). In either instance the resulting polyamide-poly(phenylene ether) blend exhibits improved compatibility, particularly as evidenced by enhanced impact strength, mold knit line strength, and/or tensile elongation. Examples of compatibilizing agents include liquid diene polymers, epoxy compounds, oxidized polyolefin wax, quinones, organosilane compounds, polyfunctional compounds, acid-functionalized poly(phenylene ether)s, and combinations thereof. In some embodiments, the compatibilizing agent is selected from the group consisting of citric acid, agaricic acid, malic acid, fumaric acid, maleic acid, maleic anhydride, maleic anhydride-functionalized poly(phenylene ether), and combinations thereof.

Polyesters are characterized by the presence of a plurality of ester (-C(O)O-) groups. In some embodiments, the polyester comprises repeat units of the formula 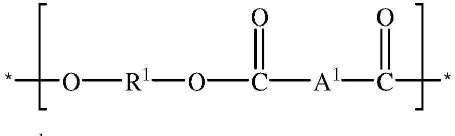 wherein each occurrence of R¹ is independently a divalent aliphatic, alicyclic, or aromatic hydrocarbon, or a divalent polyoxyalkylene radical, and each occurrence of A¹ is independently a divalent aliphatic, alicyclic, or aromatic radical. Examples of polyesters containing of the above formula are poly(alkylene dicarboxylate)s, liquid crystalline polyesters, and polyester copolymers. Examples of aromatic dicarboxylic acids incorporating the residue A¹ are isophthalic acid, terephthalic acid, 1,2-di(p-carboxyphenyl)ethane, 4,4'-dicarboxydiphenyl ether, 4,4' bisbenzoic acid, and combinations thereof. Acids containing fused rings can also be present, such as in 1,4-naphthalenedicarboxylic acid, 1,5-naphthalenedicarboxylic acid, and 2,6-naphthalenedicarboxylic acid. The preferred dicarboxylic acids are terephthalic acid, isophthalic acid, naphthalene dicarboxylic acid, cyclohexane dicarboxylic acid, and combinations thereof. Particularly suitable polyesters are poly(ethylene terephthalate) (PET), poly(1,3-propylene terephthalate) (PPT), poly(1,4-butylene terephthalate) (PBT), poly(butylene naphthanoate) (PBN), poly(1,4-cyclohexylene terephthalate), poly(cyclohexanedimethylene terephthalate) (PCT), poly(ethylene terephthalate-*co*-cyclohexanedimethylene terephthalate) (including copolymers having more than 50 mole percent ethylene terephthalate units, known as PETG, and copolymers having more than 50 mole percent cyclohexanedimethylene terephthalate, known as PCTG), poly(2,2,4,4-tetramethylcyclobutylene terephthalate), poly(cyclohexanedimethylene terephthalate-*co*-2,2,4,4-tetramethylcyclobutylene terephthalate), and combinations thereof.

Polyesters can be obtained by a number of well-known processes. Polyesters are also commercially available from a variety of sources.

When the semicrystalline resin comprises a polyester, a compatibilizing agent can, optionally, be used to facilitate formation of a compatibilized blend of the polyester and the poly(phenylene ether). Examples of compatibilizing agents for polyesters and poly(phenylene ether)s include styrene polymers with side chains comprising cyclic imino ether groups (see, e.g., U.S. Patent No. 5,011,889 to Hamersma et al.), difunctional or polyfunctional aromatic epoxy compounds (see, e.g., European Patent Application Publication No. 0 276 327 A1 of Nakamura et al.), poly(phenylene ether)-polyester copolymers (see, e.g., U.S. Patent No. 4,845,160 to Sybert), aromatic polycarbonates (see, e.g., U.S. Patent No. 4,786,664 to Yates), and combinations thereof.

The foamed material comprises the semicrystalline resin in an amount of 50 to 90 weight percent, based on the total weight of the foamed material. Within this range, the semicrystalline resin content can be 50 to 80 weight percent, specifically 50 to 70 weight percent.

In addition to the semicrystalline resin, the foamed material comprises a poly(phenylene ether). Poly(phenylene ether)s include those comprising repeating structural units having the formula 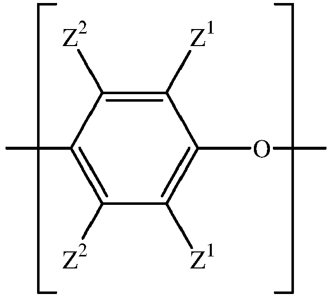 wherein each occurrence of Z¹ is independently halogen, unsubstituted or substituted C₁-C₁₂ hydrocarbyl provided that the hydrocarbyl group is not tertiary hydrocarbyl, C₁-C₁₂ hydrocarbylthio, C₁-C₁₂ hydrocarbyloxy, or C₂-C₁₂ halohydrocarbyloxy wherein at least two carbon atoms separate the halogen and oxygen atoms; and each occurrence of Z² is independently hydrogen, halogen, unsubstituted or substituted C₁-C₁₂ hydrocarbyl provided that the hydrocarbyl group is not tertiary hydrocarbyl, C₁-C₁₂ hydrocarbylthio, C₁-C₁₂ hydrocarbyloxy, or C₂-C₁₂ halohydrocarbyloxy wherein at least two carbon atoms separate the halogen and oxygen atoms. As used herein, the term "hydrocarbyl", whether used by itself, or as a prefix, suffix, or fragment of another term, refers to a residue that contains only carbon and hydrogen. The residue can be aliphatic or aromatic, straight-chain, cyclic, bicyclic, branched, saturated, or unsaturated. It can also contain combinations of aliphatic, aromatic, straight chain, cyclic, bicyclic, branched, saturated, and unsaturated hydrocarbon moieties. However, when the hydrocarbyl residue is described as substituted, it may, optionally, contain heteroatoms over and above the carbon and hydrogen members of the substituent residue. Thus, when specifically described as substituted, the hydrocarbyl residue can also contain one or more carbonyl groups, amino groups, hydroxyl groups, or the like, or it can contain heteroatoms within the backbone of the hydrocarbyl residue. As one example, Z¹ can be a di-n-butylaminomethyl group formed by reaction of a terminal 3,5-dimethyl-1,4-phenyl group with the di-n-butylamine component of an oxidative polymerization catalyst.

The poly(phenylene ether) can comprise molecules having aminoalkyl-containing end group(s), typically located in a position ortho to the hydroxyl group. Also frequently present are tetramethyldiphenoquinone (TMDQ) end groups, typically obtained from 2,6-dimethylphenol-containing reaction mixtures in which tetramethyldiphenoquinone by-product is present. The poly(phenylene ether) can be in the form of a homopolymer, a copolymer, a graft copolymer, an ionomer, or a block copolymer, as well as combinations thereof.

In some embodiments, the poly(phenylene ether) comprises a poly(phenylene ether)-polysiloxane block copolymer. As used herein, the term "poly(phenylene ether)-polysiloxane block copolymer" refers to a block copolymer comprising at least one poly(phenylene ether) block and at least one polysiloxane block.

In some embodiments, the poly(phenylene ether)-polysiloxane block copolymer is prepared by an oxidative copolymerization method. In this method, the poly(phenylene ether)-polysiloxane block copolymer is the product of a process comprising oxidatively copolymerizing a monomer mixture comprising a monohydric phenol and a hydroxyaryl-terminated polysiloxane. In some embodiments, the monomer mixture comprises 70 to 99 parts by weight of the monohydric phenol and 1 to 30 parts by weight of the hydroxyaryl-terminated polysiloxane, based on the total weight of the monohydric phenol and the hydroxyaryl-terminated polysiloxane. The hydroxyaryl-diterminated polysiloxane can comprise a plurality of repeating units having the structure 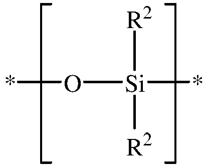 wherein each occurrence of R² is independently hydrogen, C₁-C₁₂ hydrocarbyl or C₁-C₁₂ halohydrocarbyl; and two terminal units having the structure 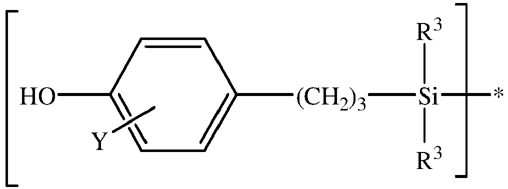 wherein Y is hydrogen, C₁-C₁₂ hydrocarbyl, C₁-C₁₂ hydrocarbyloxy, or halogen, and wherein each occurrence of R³ is independently hydrogen, C₁-C₁₂ hydrocarbyl or C₁-C₁₂ halohydrocarbyl. In a very specific embodiment, each occurrence of R⁸ and R⁹ is methyl, and Y is methoxyl.

In some embodiments, the monohydric phenol comprises 2,6-dimethylphenol, and the hydroxyaryl-terminated polysiloxane has the structure 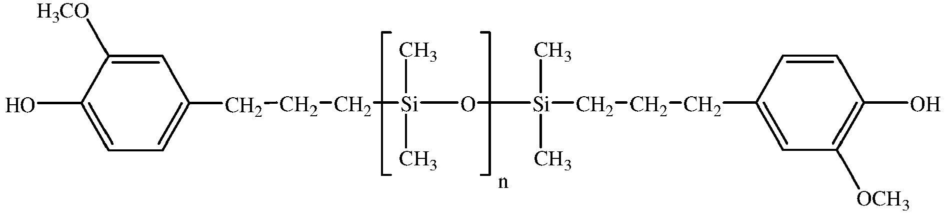 wherein n is, on average, 5 to 100, specifically 30 to 60.

The oxidative copolymerization method produces poly(phenylene ether)-polysiloxane block copolymer as the desired product and poly(phenylene ether) (without an incorporated polysiloxane block) as a by-product. It is not necessary to separate the poly(phenylene ether) from the poly(phenylene ether)-polysiloxane block copolymer. The poly(phenylene ether)-polysiloxane block copolymer can thus be utilized as a "reaction product" that includes both the poly(phenylene ether) and the poly(phenylene ether)-polysiloxane block copolymer. Certain isolation procedures, such as precipitation from isopropanol, make it possible to assure that the reaction product is essentially free of residual hydroxyaryl-terminated polysiloxane starting material. In other words, these isolation procedures assure that the polysiloxane content of the reaction product is essentially all in the form of poly(phenylene ether)-polysiloxane block copolymer. Detailed methods for forming poly(phenylene ether)-polysiloxane block copolymers are described in U.S. Patent Nos. 8,017,697 and 8,669,332 to Carrillo et al.

In some embodiments, the poly(phenylene ether) has an intrinsic viscosity of 0.25 to 1 deciliter per gram measured by Ubbelohde viscometer at 25°C in chloroform. Within this range, the poly(phenylene ether) intrinsic viscosity can be 0.3 to 0.65 deciliter per gram, more specifically 0.35 to 0.5 deciliter per gram, even more specifically 0.4 to 0.5 deciliter per gram.

In some embodiments, the poly(phenylene ether) comprises a homopolymer or copolymer of monomers selected from the group consisting of 2,6-dimethylphenol, 2,3,6-trimethylphenol, and combinations thereof. In some embodiments, the poly(phenylene ether) comprises a poly(phenylene ether)-polysiloxane block copolymer. In these embodiments, the poly(phenylene ether)-polysiloxane block copolymer can, for example, contribute 0.05 to 5 weight percent, specifically 0.1 to 3 weight percent, more specifically 0.2 to 2 weight percent, of siloxane groups to the foamed material as a whole.

The foamed material comprises the poly(phenylene ether) in an amount of 10 to 50 weight percent, based on the total weight of the foamed material. Within this range, the poly(phenylene ether) content can be 20 to 50 weight percent, specifically 30 to 50 weight percent.

In some embodiments, the foamed material comprises 90 to 100 weight percent total of the polyamide and the poly(phenylene ether). Within this range, the total of the polyamide and the poly(phenylene ether) can be 95 to 100 weight percent, specifically 98 to 100 weight percent.

In addition to the semicrystalline resin, the poly(phenylene ether), and the optional compatibilizing agents described above, the foamed material can, optionally, further comprise an additional polymer selected from the group consisting of homopolystyrenes (including atactic, isotactic, and syndiotactic polystyrenes), rubber-modified polystyrenes, and combinations thereof. When present, the total amount of additional polymer is typically 1 to 20 weight percent, based on the total weight of the foamed material.

The foamed material can, optionally, further include one or more additives known in the thermoplastics art. For example, the foamed material can, optionally, further comprise an additive selected from the group consisting of stabilizers, mold release agents, lubricants, processing aids, flame retardants, drip retardants, nucleating agents, UV blockers, dyes, pigments, antioxidants, anti-static agents, mineral oil, metal deactivators, antiblocking agents, and combinations thereof. When present, such additives are typically used in a total amount of less than or equal to 15 weight percent, specifically less than or equal to 10 weight percent, more specifically less than or equal to 5 weight percent, based on the total weight of the foamed material.

The foamed material can, optionally, exclude components not described herein as required. In addition to the optional additives and the optional additional polymer described above, the foamed material can, optionally, exclude fillers (including reinforcing fillers and non-reinforcing fillers), electrically conductive agents (including carbon nanofibers and conductive carbon black), halogenated blowing agents, and combinations thereof.

The foamed material has a density of 40 to 700 kilograms/meter³ at 23 °C. Within this range, the density can be 60 to 600 kilograms/meter³, specifically 80 to 400 kilograms/meter³. Density at 23 °C can be determined by weighing a foam sample, immersing it completely in 23°C water and measuring the volume change associated with immersion of the sample. Density is then calculated as weight divided by volume, and, if necessary, converting the units to express the density in units of kilograms per meter³. The density of the foam can be controlled, for example, by the identity and content of the blowing agent.

In a very specific embodiment of the foamed material, the semicrystalline resin is polyamide-6,6, the poly(phenylene ether) comprises poly(2,6-dimethyl-1,4-phenylene ether), the composition comprises 50 to 80 weight percent of the polyamide and 20 to 50 weight percent of the poly(phenylene ether), the foamed material comprises 90 to 100 weight percent total of the polyamide and the poly(phenylene ether), and the foamed composition has a density of 100 to 600 kilograms/meter³ measured at 23 °C.

Another embodiment is an article comprising the foamed material in any of its above-described variations. The foamed material is particularly suited for fabricating articles that require its good solvent resistance. Such articles include automotive underhood components, specifically automotive underhood covers, automotive underhood shields, and automotive underhood battery holders.

Another embodiment is a method of forming a foamed material, the method comprising: adding a blowing agent to a molten thermoplastic material to form a pre-foamed molten thermoplastic material; wherein the molten thermoplastic material comprises the product of melt blending (a) 50 to 90 weight percent of a semicrystalline resin selected from the group consisting of polyamides, polyesters, and combinations thereof, and (b) 10 to 50 weight percent of a poly(phenylene ether); wherein weight percent are based on the total weight of the foamed material; and extruding the pre-foamed molten thermoplastic material from an extruder to form the foamed material; wherein the foamed material has a density of 40 to 700 kilograms/meter³ measured at 23 °C.

Particularly suitable blowing agents include C₃-C₆ alkanes, C₁-C₄ alcohols (including methanol, ethanol, and isopropanol), carbon dioxide, molecular nitrogen, water, and combinations thereof. In some embodiments, the blowing agent is selected from the group consisting of propane, 2-methylpropane, n-butane, 2-methylbutane, n-pentane, neopentane, and combinations thereof. Adding the blowing agent to the molten thermoplastic material is typically conducted at a rate of 0.1 to 20 weight percent, based on the weight of the molten thermoplastic material. Within this range, the blowing agent can be added in an amount of 0.4 to 15 weight percent, specifically 1 to 10 weight percent.

In some embodiments, the molten thermoplastic material comprises a continuous phase comprising the semicrystalline resin and a disperse phase comprising the poly(phenylene ether), and the disperse phase comprises disperse phase particles having a mean cross-sectional area of 0.2 to 5 micrometers². The cross-sectional area of the disperse phase particles can be determined by electron microscopy.

All ranges disclosed herein are inclusive of the endpoints, and the endpoints are independently combinable with each other. Each range disclosed herein constitutes a disclosure of any point or sub-range lying within the disclosed range.

The invention is further illustrated by the following non-limiting examples.

### EXAMPLE 1

Components used to form foamed compositions are summarized in Table 1.

**Table 1**

| Component | Description |
|---|---|
| PPE 0.3 | Poly(2,6-dimethyl-1,4-phenylene ether), CAS Reg. No. 24938-67-8, having an intrinsic viscosity of about 0.32 deciliter per gram as measured in chloroform at 25°C; obtained as PPO™ 80630 resin from SABIC Innovative Plastics. |
| PPE 0.4 | Poly(2,6-dimethyl-1,4-phenylene ether), CAS Reg. No. 24938-67-8, having an intrinsic viscosity of about 0.40 deciliter per gram as measured in chloroform at 25°C; obtained as PPO™ 80640 resin from SABIC Innovative Plastics. |
| PS | Atactic homopolystyrene, CAS Reg. No. 9003-53-6, having a melt flow index of about 7 grams per 10 minutes at 200 °C and 5 kilogram load; obtained as LACQRENE™ 1450N High Heat Resistance Polystyrene from TOTAL Petrochemicals. |
| PA66 low IV | Polyamide-6,6, CAS Reg. No. 32131-17-2, having a viscosity number of 123-129 milliliters per gram and an amine endgroup content of 40-60 microequivalents per gram; obtained as STABAMID™ 24FE1 from Solvay. |
| PA66 high IV | Polyamide-6,6, CAS Reg. No. 32131-17-2, having an viscosity number of 223-243 milliliters per gram and an amine endgroup content of 30-50 microequivalents per gram; obtained as RADIPOL™ A95H01 resin from Radici Group. |
| Citric acid | Citric acid, CAS Reg. No. 77-92-9; obtained from Jungbunzlauer. |
| Isobutane | Isobutane, CAS Reg. No. 75-28-5; obtained as DRIVOSOL™ 21 from Evonic Industries AG. |
| Talc | Talc, CAS Reg. No. 14807-96-6; obtained as ULTRATALC™ from Imerystalc. |
| Antioxidant | Octadecyl 3-(3,5-di-tert.butyl-4-hydroxyphenyl)-propionate, CAS Reg. No. 2082-79-3; obtained as IRGANOX™ 1076 from Ciba Specialty Chemicals. |
| CuI | Cuprous iodide, CAS Reg. No. 7681-65-4. |
| KI, 50% in water | Potassium iodide, CAS Reg. No. 7681-11-0, 50 weight percent solution in water. |

Compositions are summarized in Table 2, where component amounts are expressed in weight percent per 100 weight percent resin (i.e., total of poly(phenylene ether), polystyrene, and polyamide). Compositions were prepared by dry blending components other than the polyamide using a high speed blender. The resulting dry blend was melt mixed with the polyamide using a ZSK 28 millimeter twin-screw extruder. The temperature of the barrel was 300 °C, the screw speed was 300 rotations per minute, the throughput was 13.5-16 kilograms/hour and the torque was 80%.

Foaming experiments were conducted using a 15 milliliter Xplore™ conical twin-screw micro compounder equipped with a static mixer and gas inlet. The screw had a conical shape with a length of about 20 centimeters. The throughput was in the range of 1.5 to 5 grams/minute and the screw speed was 100 rotations per minute. The barrel temperature set point was in the range 270 to 290 °C and the temperature of the melt was about 270 °C. Talc was used as a nucleating agent at 1 weight percent, and isobutane as a blowing agent at 22-27 weight percent.

Physical and thermal properties of the unfoamed compositions were determined using test samples injection molded on an Engle 110 ton injection molding machine operating at a barrel temperature of 290 °C and a mold temperature of 100 °C. Melt viscosity values, expressed in units of pascal-seconds, were determined according to ISO 11443-2005 at a temperature of 300 °C. Melt volume flow rate (MVR) values, expressed in units of centimeter³ per ten minutes, were determined according to ISO 1113-2011 at a temperature of 300 °C and a load of 5 kilograms. Density values of unfoamed samples, expressed in units of grams per centimeter³, were determined according to ISO 1183-2004 at a temperature of 23 °C. Vicat B values, expressed in units of degrees centigrade, were determined according to ISO 306-2004 at a load of 50 Newtons and a heating rate of 120 °C/hour. Tensile modulus and tensile strength at break values, each expressed in units of megapascals, were determined according to ISO 527-1993 using a sample having dimensions 80 × 10 × 4 millimeters, a gage length of 50 millimeters, and a test speed of 50 millimeters per minute.

For foamed samples, chemical resistance was determined by immersing foamed strands in octane for one minute at 23 °C, then bending the samples and noting whether they were brittle or ductile. For Example 1, the characterization of chemical resistance as "excellent" corresponded to ductility after bending to an angle of 90 degrees. For Example 2, the characterization of chemical resistance as "excellent" corresponded to ductility after bending to an angle of 180 degrees. For Comparative Examples 1 and 2, the characterization of chemical resistance as "poor" corresponded to brittle failure after bending to an angle of 30 degrees.

The property results in Table 2 show that, relative to foams containing polystyrene and poly(phenylene ether), foams containing polyamide and poly(phenylene ether) exhibit much better solvent resistance.

**Table 2**

| | Ex. 1 | Ex. 2 | C. Ex. 1 | C. Ex. 2 |
|---|---|---|---|---|
| COMPOSITIONS | | | | |
| PPE 0.3 | 0 | 0 | 50 | 0 |
| PPE 0.4 | 40 | 40 | 0 | 70 |
| PS | 0 | 0 | 50 | 30 |
| PA66 low IV | 60 | 0 | 0 | 0 |
| PA66 high IV | 0 | 60 | 0 | 0 |
| Citric acid | 0.65 | 0.65 | 0 | 0 |
| Talc | 0 | 1 | 1 | 1 |
| Antioxidant | 0.3 | 0.3 | 0 | 0 |
| CuI | 0.01 | 0.01 | 0 | 0 |
| KI, 50% in water | **0.1** | 0.1 | 0 | 0 |

| PROPERTIES, UNFOAMED | | | | |
|---|---|---|---|---|
| Melt viscosity, 300 °C (Pa.s) | 115 | 245 | -- | -- |
| MVR (cm³/10 min) | 89 | 12 | -- | -- |
| Density (g/cm³) | 1.10 | 1.10 | 1.06 | 1.08 |
| Vicat B (°C) | 225 | 215 | 145 | 169 |
| Tensile modulus (MPa) | 2750 | 2687 | 2540 | -- |
| Tensile strength at break (MPa) | 67 | 60 | 70 | -- |

| PROPERTIES, FOAMED | | | | |
|---|---|---|---|---|
| Chemical resistance | excellent | excellent | poor | poor |

## Claims

1. A foamed material, comprising, based on the total weight of the foamed material:
50 to 90 weight percent of a semicrystalline resin selected from the group consisting of polyamides, polyesters, and combinations thereof; and
10 to 50 weight percent of a poly(phenylene ether);
wherein the foamed material has a density of 40 to 700 kilograms/meter³ at 23 °C.

2. The foamed material of claim 1, wherein the semicrystalline resin is a polyamide.

3. The foamed material of claim 2, wherein the polyamide is selected from the group consisting of polyamide-6, polyamide-6,6, polyamide-4,6, polyamide-11, polyamide-12, polyamide-6,10, polyamide-6,12, polyamide-6/6,6, polyamide-6/6,12, polyamide-MXD,6, polyamide-6,T, polyamide-6,I, polyamide-6/6,T, polyamide-6/6,I, polyamide-6,6/6,T, polyamide-6,6/6,I, polyamide-6/6,T/6,I, polyamide-6,6/6,T/6,I, polyamide-6/12/6,T, polyamide-6,6/12/6,T, polyamide-6/12/6,I, polyamide-6,6/12/6,I, polyamide-9,T, and combinations thereof.

4. The foamed material of claim 3, wherein the polyamide is polyamide-6,6.

5. The foamed material of claim 1, wherein the semicrystalline resin is a polyester.

6. The foamed material of claim 5, wherein the polyester comprises repeat units of the formula 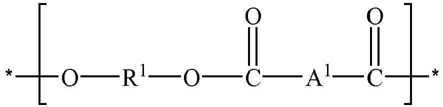 wherein each occurrence of R¹ is independently a divalent aliphatic, alicyclic, or aromatic hydrocarbon, or a divalent polyoxyalkylene radical, and each occurrence of A¹ is independently a divalent aliphatic, alicyclic, or aromatic radical.

7. The foamed material of any one of claims 1-4, comprising 90 to 100 weight percent total of the polyamide and the poly(phenylene ether).

8. The foamed material of claim 1,
wherein the semicrystalline resin is polyamide-6,6;
wherein the poly(phenylene ether) comprises poly(2,6-dimethyl-1,4-phenylene ether);
wherein the composition comprises 50 to 80 weight percent of the polyamide and 20 to 50 weight percent of the poly(phenylene ether);
wherein the foamed material comprises 90 to 100 weight percent total of the polyamide and the poly(phenylene ether), and
wherein the foamed composition has a density of 100 to 600 kilograms/meter³ measured at 23 °C.

9. An article comprising the foamed material of any one of claims 1-8, preferably wherein the article is selected from the group consisting of automotive underhood covers, automotive underhood shields, and automotive underhood battery holders.

10. A method of forming a foamed material, the method comprising:
adding a blowing agent to a molten thermoplastic material to form a pre-foamed molten thermoplastic material; wherein the molten thermoplastic material comprises the product of melt blending (a) 50 to 90 weight percent of a semicrystalline resin selected from the group consisting of polyamides, polyesters, and combinations thereof, and (b) 10 to 50 weight percent of a poly(phenylene ether); wherein weight percent are based on the total weight of the foamed material; and
extruding the pre-foamed molten thermoplastic material from an extruder to form the foamed material;
wherein the foamed material has a density of 40 to 700 kilograms/meter³ measured at 23 °C.

11. The method of claim 10, wherein the blowing agent is selected from the group consisting of propane, 2-methylpropane, n-butane, 2-methylbutane, n-pentane, neopentane, and combinations thereof.

12. The method of claim 10 or 11, wherein said adding a blowing agent to a molten thermoplastic material comprises adding the blowing agent at a rate of 0.1 to 20 weight percent based on the weight of the molten thermoplastic material.

13. The method of any one of claims 10-12, wherein the molten thermoplastic material comprises a continuous phase comprising the semicrystalline resin and a disperse phase comprising the poly(phenylene ether); and wherein the disperse phase comprises disperse phase particles having a mean cross-sectional area of 0.2 to 5 micrometers² as determined by electron microscopy.

## Patentansprüche

1. Geschäumtes Material, umfassend, bezogen auf das Gesamtgewicht des geschäumten Materials:
50 bis 90 Gewichtsprozent eines teilkristallinen Harzes, ausgewählt aus der Gruppe bestehend aus Polyamiden, Polyestern, und Kombinationen davon; und
10 bis 50 Gewichtsprozent eines Poly(phenylenether)s;
wobei das geschäumte Material eine Dichte von 40 bis 700 Kilogramm/Meter³ bei 23 °C aufweist.

2. Geschäumtes Material nach Anspruch 1, wobei das teilkristalline Harz ein Polyamid ist.

3. Geschäumtes Material nach Anspruch 2, wobei das Polyamid ausgewählt ist aus der Gruppe bestehend aus Polyamid-6, Polyamid-6,6, Polyamid-4,6, Polyamid-11, Polyamid-12, Polyamid-6,10, Polyamid-6,12, Polyamid-6/6,6, Polyamid-6/6,12, Polyamid-MXD,6, Polyamid-6,T, Polyamid-6,I, Polyamid-6/6,T, Polyamid-6/6,I, Polyamid-6,6/6,T, Polyamid-6,6/6,I, Polyamid-6/6,T/6,I, Polyamid-6,6/6,T/6,I, Polyamid-6/12/6,T, Polyamid-6,6/12/6,T, Polyamid-6/12/6,I, Polyamid-6,6/12/6,I, Polyamid-9,T, und Kombinationen davon .

4. Geschäumtes Material nach Anspruch 3, wobei das Polyamid Polyamid-6,6 ist.

5. Geschäumtes Material nach Anspruch 1, wobei das teilkristalline Harz ein Polyester ist.

6. Geschäumtes Material nach Anspruch 5, wobei der Polyester Wiederholungseinheiten der Formel 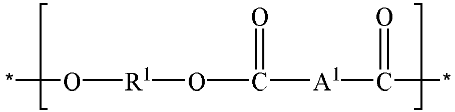 umfasst, wobei jedes Auftreten von R¹ unabhängig ein zweiwertiger aliphatischer, alicyclischer oder aromatischer Kohlenwasserstoff oder ein zweiwertiger Polyoxyalkylenrest ist, und jedes Auftreten von A¹ unabhängig ein zweiwertiger aliphatischer, alicyclischer oder aromatischer Rest ist.

7. Geschäumtes Material nach irgendeinem der Ansprüche 1 bis 4, umfassend 90 bis 100 Gewichtsprozent insgesamt des Polyamids und des Poly(phenylenether)s.

8. Geschäumtes Material nach Anspruch 1,
wobei das teilkristalline Harz Polyamid-6,6 ist;
wobei der Poly(phenylenether) Poly(2,6-dimethyl-1,4-phenylenether) umfasst;
wobei die Zusammensetzung 50 bis 80 Gewichtsprozent des Polyamids und 20 bis 50 Gewichtsprozent des Poly(phenylenether)s umfasst;
wobei das geschäumte Material 90 bis 100 Gewichtsprozent insgesamt des Polyamids und des Poly(phenylenether)s umfasst, und
wobei die geschäumte Zusammensetzung eine Dichte von 100 bis 600 Kilogramm/Meter³, gemessen bei 23 °C, aufweist.

9. Gegenstand, umfassend das geschäumte Material nach irgendeinem der Ansprüche 1 bis 8, vorzugweise wobei der Gegenstand aus der Gruppe bestehend aus Fahrzeugunterbodenabdeckungen, Fahrzeugunterbodenschutz und Fahrzeugunterbodenbatteriehaltern ausgewählt ist.

10. Verfahren zum Bilden eines geschäumten Materials, wobei das Verfahren umfasst: Hinzufügen eines Treibmittels zu einem geschmolzenen thermoplastischen Material, um ein vorgeschäumtes geschmolzenes thermoplastisches Material zu bilden; wobei das geschmolzene thermoplastische Material das Produkt eines Schmelzmischens von (a) 50 bis 90 Gewichtsprozent eines teilkristallinen Harzes, ausgewählt aus der Gruppe bestehend aus Polyamiden, Polyestern, und Kombinationen davon, und (b) 10 bis 50 Gewichtsprozent eines Poly(phenylenether)s umfasst; wobei Gewichtsprozent auf das Gesamtgewicht des geschäumten Materials bezogen ist; und
Extrudieren des vorgeschäumten geschmolzenen thermoplastischen Materials aus einem Extruder, um das geschäumte Material zu bilden;
wobei das geschäumte Material eine Dichte von 40 bis 700 Kilogramm/Meter³, gemessen bei 23 °C, aufweist.

11. Verfahren nach Anspruch 10, wobei das Treibmittel ausgewählt ist aus der Gruppe bestehend aus Propan, 2-Methylpropan, n-Butan, 2-Methylbutan, n-Pentan, Neopentan, und Kombinationen davon.

12. Verfahren nach Anspruch 10 oder 11, wobei das Hinzufügen eines Treibmittels zu einem geschmolzenen thermoplastischen Material das Hinzufügen des Treibmittels mit einer Rate von 0,1 bis 20 Gewichtsprozent, bezogen auf das Gewicht des geschmolzenen thermoplastischen Materials, umfasst.

13. Verfahren nach irgendeinem der Ansprüche 10 bis 12, wobei das geschmolzene thermoplastische Material eine kontinuierliche Phase, die das teilkristalline Harz umfasst, und eine disperse Phase, die den Poly(phenylenether) umfasst, umfasst; und wobei die disperse Phase Dispers-Phasen-Partikel mit einer mittleren Querschnittsfläche von 0,2 bis 5 Mikrometer², wie durch Elektronenmikroskopie bestimmt, umfasst.

## Revendications

1. Matériau expansé, comprenant, par rapport au poids total du matériau expansé :
50 à 90 pourcents en poids d'une résine semi-cristalline choisie dans le groupe consistant en les polyamides, les polyesters et les combinaisons de ceux-ci ; et
10 à 50 pourcents en poids d'un poly(phénylène éther) ;
dans lequel le matériau expansé présente une masse volumique de 40 à 70 kilogrammes/mètre³ à 23 °C.

2. Matériau expansé selon la revendication 1, dans lequel la résine semi-cristalline est un polyamide.

3. Matériau expansé selon la revendication 2, dans lequel le polyamide est choisi dans le groupe consistant en le polyamide-6, le polyamide-6,6, le polyamide-4,6, le polyamide-11, le polyamide-12, le polyamide-6,10, le polyamide-6,12, le polyamide-6/6,6, le polyamide-6/6,12, le polyamide-MXD,6, le polyamide-6,T, le polyamide-6,I, le polyamide-6/6,T, le polyamide-6/6,I, le polyamide-6,6/6,T, le polyamide-6,6/6,I, le polyamide-6/6,T/6,I, le polyamide-6,6/6,T/6,I, le polyamide-6/12/6,T, le polyamide-6,6/12/6,T, le polyamide-6/12/6,I, le polyamide-6,6/12/6,I, le polyamide-9,T, et les combinaisons de ceux-ci.

4. Matériau expansé selon la revendication 3, dans lequel le polyamide est le polyamide-6,6.

5. Matériau expansé selon la revendication 1, dans lequel la résine semi-cristalline est un polyester.

6. Matériau expansé selon la revendication 5, dans lequel le polyester comprend des motifs répétitifs de formule 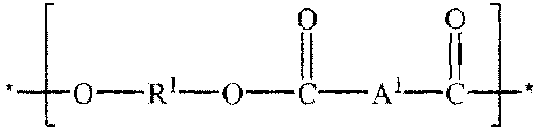 dans laquelle chaque occurrence de R¹ représente d'une manière indépendante un hydrocarbure aliphatique, alicyclique ou aromatique divalent, ou un radical polyoxyalkylène divalent, et chaque occurrence de A¹ représente d'une manière indépendante un radical aliphatique, alicyclique ou aromatique divalent.

7. Matériau expansé selon l'une des revendications 1 à 4, comprenant 90 à 100 pourcents en poids du total du polyamide et du poly(phénylène éther).

8. Matériau expansé selon la revendication 1,
dans lequel la résine semi-cristalline est le polyamide-6,6 ;
dans lequel le poly(phénylène éther) comprend du poly(2,6-diméthyl-1,4-phénylène éther) ;
dans lequel la composition comprend 50 à 80 pourcents en poids du polyamide et 20 à 50 pourcents en poids du poly(phénylène éther) ;
le matériau expansé comprenant 90 à 100 pourcents en poids du total du polyamide et du poly(phénylène éther), et
dans lequel la composition expansée présente une masse volumique de 100 à 600 kilogrammes/mètre³, mesurée à 23 °C.

9. Article comprenant le matériau expansé selon l'une des revendications 1 à 8, l'article étant de préférence choisi dans le groupe consistant en les couvercles sous capot, boucliers sous capot et supports de batterie sous capot de véhicules automobiles.

10. Procédé de formation d'un matériau expansé, le procédé comprenant :
l'addition d'un agent porogène à un matériau thermoplastique fondu pour former un matériau thermoplastique fondu pré-expansé ; le matériau thermoplastique fondu comprenant le produit du mélange à l'état fondu de (a) 50 à 90 pourcents en poids d'une résine semi-cristalline choisie dans le groupe consistant en les polyamides, les polyesters et les combinaisons de ceux-ci, et (b) 10 à 50 pourcents en poids d'un poly(phénylène éther) ; les pourcentages en poids étant rapportés au poids total du matériau expansé ; et
l'extrusion du matériau thermoplastique fondu pré-expansé à partir d'une extrudeuse pour former le matériau expansé ;
dans lequel le matériau expansé présente une masse volumique de 40 à 700 kilogrammes/mètre³ mesurée à 23 °C.

11. Procédé selon la revendication 10, dans lequel l'agent porogène est choisi dans le groupe consistant en le propane, le 2-méthylpropane, le n-butane, le 2-méthylbutane, le n-pentane, le néopentane et les combinaisons de ceux-ci.

12. Procédé selon la revendication 10 ou 11, dans lequel ladite addition d'un agent porogène à un matériau thermoplastique fondu comprend l'addition de l'agent porogène à raison de 0,1 à 20 pourcents en poids par rapport au poids du matériau thermoplastique fondu.

13. Procédé selon l'une des revendications 10 à 12, dans lequel le matériau thermoplastique fondu comprend une phase continue comprenant la résine semi-cristalline et une phase dispersée comprenant le poly(phénylène éther) ; et dans lequel la phase dispersée comprend des particules en phase dispersée présentant une aire moyenne en section transversale de 0,2 à 5 micromètres², telle que déterminée au microscope électronique.
